## Europäisches Patentamt

## European Patent Office

## Office européen des brevets

(19)

(11) Veröffentlichungsnummer: **0 222 682**
**B1**

(12) **EUROPÄISCHE PATENTSCHRIFT**

(45) Veröffentlichungstag der Patentschrift:
18.07.90

(51) Int. Cl.⁵: **H02H 1/00**, H02H 7/26

(21) Anmeldenummer: **86730150.9**

(22) Anmeldetag: **03.10.86**

(54) Signalübertragungsanordnung für eine Vergleichsschutzeinrichtung.

(30) Priorität: **15.10.85  DE 3537072**

(43) Veröffentlichungstag der Anmeldung:
**20.05.87 Patentblatt 87/21**

(45) Bekanntmachung des Hinweises auf die Patenterteilung:
**18.07.90 Patentblatt 90/29**

(84) Benannte Vertragsstaaten:
**AT BE CH DE FR IT LI NL SE**

(56) Entgegenhaltungen:
**BULL. SEV/VSE, Band 11, Nr. 65, 1. Juni 1974,
Seiten 821-827, CH; F. EGGIMANN et al.:
"Fernauslösetechnik - eine besondere Form von
Nachrichtenübertragung"
BROWN BOVERI MITTEILUNGEN, Band 55, Nr. 4/5,
April/Mai 1968, Seiten 236-240, CH; A. ZOTTLER:
"Schutzsignal-Übertragungsgeräte Typ NSD"**

(73) Patentinhaber: **Siemens Aktiengesellschaft,
Wittelsbacherplatz 2, D-8000 München 2(DE)**

(72) Erfinder: **Rudat, Lothar, Dipl.-Ing., Jugendweg 2,
D-1000 Berlin 13(DE)**

ACTORUM AG

## Beschreibung

Die Erfindung betrifft eine Signalübertragungsanordnung für eine Vergleichsschutzeinrichtung, bei der an zwei Enden eines zu überwachenden Schutzabschnittes einer Energieübertragungsanlage in jeweils einer Überwachungsstation Meßgrößen erfaßt werden und in jeder Überwachungsstation jeweils in Abhängigkeit von den in beiden Überwachungsstationen erfaßten Meßgrößen ein Abschaltsignal für einen Schalter an dem jeweiligen Ende des Schutzabschnittes erzeugt wird, mit einer die beiden Überwachungsstationen verbindenden Signalleitung zur Übertragung der Meßgrößen oder einer aus ihnen gebildeten Vergleichsgröße und mit zwei Sende-/Empfangseinrichtungen, die jeweils einen Frequenzsignalgenerator und einen Frequenzsignalempfänger mit einem Fehlermeldeausgang und einen Übertrager aufweisen, wobei der Frequenzsignalgenerator einer der beiden Sende-/ Empfangseinrichtungen ausgangsseitig über den zugehörigen Übertrager mit einem Ende der Signalleitung in Verbindung steht und der Frequenzssignalempfänger der anderen Sende-/Empfangseinrichtung eingangsseitig über den entsprechenden Übertrager mit dem anderen Ende der Signalleitung verbunden ist.

Eine derartige, aus dem Siemens-Katalog R1 "Elektronische Schutzeinrichtungen", 1979 bekannte und dort auf Seite 6/13 in den Bildern 6/16 und 6/17 dargestellte Signalübertragungsanordnung ist Bestandteil einer als Leitungsdifferentialschutzeinrichtung ausgebildeten Vergleichsschutzeinrichtung, bei der an zwei Enden einer zu überwachenden Energieübertragungsleitung in jeweils einer Überwachungsstation die Phasenströme auf der Leitung erfaßt werden; aus den an beiden Enden der Energieübertragungsleitung erfaßten Phasenströmen wird ein Differenzstrom abgeleitet, der auf einer zweiadrigen Signalleitung zwischen den beiden Überwachungsstationen fließt. Der Differenzstrom wird in jeder Überwachungsstation zur Bildung eines Abschaltsignals im Falle eines Leitungsfehlers für einen Schalter herangezogen, der im Zuge der Energieübertragungsleitung jeweils an ihrem der betreffenden Überwachungsstation zugeordneten Ende angeordnet ist und von dieser gesteuert wird.

Um im Falle eines Fehlers auf der Energieübertragungsleitung eine sichere Abschaltung zu gewährleisten, ist eine Überwachung der den Differenzstrom übertragenden zweiadrigen Signalleitung vorgesehen. Hierzu ist in jeder Überwachungsstation an beiden Enden der Signalleitung jeweils eine Sende-/Empfangseinrichtung mit einem Frequenzsignalgenerator, einem Frequenzsignalempfänger und einem Übertrager angeschlossen. Während in einer der beiden Sende-/Empfangseinrichtungen der Frequenzsignalgenerator über den Übertrager an dem entsprechenden Ende der Signalleitung angeschlossen ist, liegt in der anderen Sende-/Empfangseinrichtung der in ihr angeordnete Frequenzsignalempfänger über den zugeordneten Übertrager an dem anderen Ende der Signalleitung und überwacht diese auf Vorhandensein des von dem Frequenzsignalgenerator an dem einen Ende der Signalleitung abgegebenen Frequenzsignals.

Es ist bekannt und beispielsweise in dem Buch H. Clemens, K. Rothe: "Relaisschutztechnik in Elektroenergiesystemen", 1980, VEB Verlag Technik, Berlin auf Seite 190 dargelegt, bei Distanzschutzeinrichtungen mit Überwachungsstationen an beiden Enden eines zu überwachenden Schutzabschnittes einer Energieübertragungsanlage im Falle der Auslösung eines Abschaltvorganges an einem der beiden Enden von der dortigen Überwachungsstation ein sogenanntes Mitnahmesignal an die dem jeweils anderen Ende zugeordnete Überwachungsstation zu übertragen, um diese zu einer Abschaltung des Schutzabschnittes auch an diesem Ende anzuregen.

Der Erfindung liegt die Aufgabe zugrunde, für eine Vergleichsschutzeinrichtung mit einer fehlerüberwachten Signalleitung zwischen zwei Überwachungsstationen eine Signalübertragungsanordnung anzugeben, die eine gegenseitige Anregung beider Überwachungsstationen aufgrund eines in jeweils einer der beiden Überwachungsstationen erzeugten oder ihr extern zugeführten Mitnahmesignals ermöglicht, ohne daß hierzu ein zusätzlicher Signalübertragungsweg erforderlich ist.

Diese Aufgabe wird erfindungsgemäß dadurch gelöst, daß bei der Signalübertragungsanordnung der eingangs angegebenen Art in beiden Sende-/Empfangseinrichtungen jeweils der Ausgang des Frequenzsignalgenerators mit dem Eingang des Frequenzsignalempfängers verbunden ist, daß jeder Frequenzsignalgenerator einen durch ein Mitnahmesignal aktivierbaren Steuereingang aufweist, daß der Frequenzsignalgenerator der einen Sende-/Empfangseinrichtung zur Abgabe eines mit einer vorgegebenen Tast- und Tastpausenzeit getakteten ersten Frequenzsignals bei deaktiviertem Steuereingang ausgebildet ist, daß der Ausgang des Frequenzsignalgenerators in der anderen Sende-/Empfangseinrichtung bei deaktiviertem Steuereingang abgeschaltet ist, daß beide Frequenzsignalgeneratoren durch steuereingangsseitige Beaufschlagung mit dem Mitnahmesignal jeweils zur ausgangsseitigen Abgabe eines zweiten getakteten Frequenzsignals mit einer weiteren vorgegebenen Tast- und Tastpausenzeit aktivierbar sind, daß jeder Frequenzsignalempfänger jeweils eine an seinem Eingang angeschlossene Signalauswerteeinrichtung enthält, die ausgangsseitig ein Abschaltsignal für den der betreffenden Überwachungsstation zugeordneten Schalter in Abhängigkeit davon abgibt, daß zumindest einmalig an dem Eingang des Frequenzsignalempfängers ein Frequenzsignal mit einer der weiteren Tastzeit zumindest annähernd entsprechenden Signaldauer und nachfolgend einer der weiteren Tastpausenzeit zumindest annähernd entsprechenden Signalpause auftritt, und daß jeder Frequenzsignalempfänger eine Zeitablaufstufe enthält, die einen dem Eingang des Frequenzsignalempfängers nachgeordneten Rücksetzeingang aufweist und ausgangsseitig den Fehlermeldeausgang des betreffenden Frequenzsignalempfänger bildet.

Der wesentliche Vorteil der erfindungsgemäßen Signalübertragungsanordnung besteht darin, daß sie zusätzlich zu der Übertragung der Meßgrößen bzw. der Vergleichsgröße zwischen den Überwachungsstationen und der Funktion der Überwachung der Signalleitung auch die Übertragung von Mitnahmesignalen zwischen den zwei Überwachungsstationen auf der Signalleitung ermöglicht.

Dabei werden die Sende-/Empfangseinrichtungen durch die Übertrager von der Signalleitung und den an ihr angeschlossenen Überwachungsstationen galvanisch getrennt; zur Signaltrennung können in einfacher Weise auf die Frequenz der Frequenzsignale abgestimmte Bandfilter eingangsseitig in den Sende-/Empfangseinrichtungen angeordnet sein. Die Unterscheidung zwischen dem ersten Frequenzsignal zur Überwachung der Signalleitung und dem zweiten Frequenzsignal zur Übertragung eines Mitnahmesignals erfolgt in den Signalauswerteeinrichtungen der Frequenzsignalempfänger der beiden Sende-/Empfangseinrichtungen durch Überprüfung der jeweils empfangenen Signale auf ihre Tast- und Tastpausenzeit.

Solange keine Anforderung zur Übertragung eines Mitnahmesignals in einer der beiden Sende-/Empfangseinrichtungen vorliegt, wird von der einen Sende-/Empfangseinrichtung das erste Frequenzsignal mit der vorgegebenen Tast- und Tastpausenzeit in die Signalleitung eingespeist. Bei fehlerfreier Signalleitung wird das erste Frequenzsignal in dem Frequenzsignalempfänger der anderen Sende-/Empfangseinrichtung empfangen und bewirkt dort ein ständiges Rücksetzen der Zeitablaufstufe, deren Ablaufzeit größer als die Tastpausenzeit des ersten Frequenzsignals gewählt ist. Bei einem Signalleitungsfehler kann das erste Frequenzsignal nicht empfangen werden, so daß die Zeitablaufstufe abläuft und ein Fehlermeldesignal abgibt.

Sobald an einer der beiden Sende-/Empfangseinrichtungen eine Anforderung zur Übertragung eines Mitnahmesignals anliegt, wird durch den betreffenden Frequenzsignalgenerator das zweite Frequenzsignal mit der weiteren Tast- und Tastpausenzeit auf die Signalleitung geschaltet; dabei wird in der Signalauswerteeinrichtung des eigenen Frequenzsignalempfängers die Auswertung des zweiten Frequenzsignals in vorteilhafter Weise dadurch verhindert, daß jede Signalauswerteeinrichtung einen mit dem Mitnahmesignal beaufschlagbaren Deaktivierungseingang aufweist. In der Signalauswerteeinrichtung des Frequenzsignalempfängers der gegenüberliegenden Sende-/Empfangseinrichtung wird dagegen die Aussendung des Mitnahmesignals durch die eine Sende-/Empfangseinrichtung erkannt, wenn das jeweils empfangene Frequenzsignal zumindest annähernd die zur Übertragung von Mitnahmesignalen vorgegebene weitere Tast-und Tastpausenzeit aufweist. Auch bei der Übertragung von Mitnahmesignalen auf der Signalleitung bleibt die Funktion der Überwachung der Signalleitung erhalten, sofern die weitere Tastpausenzeit des zweiten Frequenzsignals kleiner als die Ablaufzeit der Zeitablaufstufen in den Frequenzsignalempfängern der beiden Sende-/Empfangseinrichtungen ist.

Bei der erfindungsgemäßen Signalübertragungsanordnung ist es von Vorteil, wenn die Tastzeit und weitere Tastzeit jeweils von gleicher vorgegebener Dauer sind und die Tastpausenzeit um ein Vielfaches größer als die Tastzeit ist und um ein Mehrfaches größer als die weitere Tastpausenzeit ist. Hierdurch wird in vorteilhafter Weise erreicht, daß auch in dem Fall, daß die eine Sende-/Empfangseinrichtung das erste Frequenzsignal zur Signalleitungsüberwachung aussendet und die ihr gegenüberliegende Sende-/Empfangseinrichtung das zweite Frequenzsignal zur Übertragung eines Mitnahmesignals aussendet, während jeder Tastpausenzeit des ersten Frequenzsignals auf der Signalleitung das zweite Frequenzsignal mit mehreren weiteren Tastzeiten und Tastpausenzeiten erscheint und somit trotz der Überlagerung mit dem ersten Frequenzsignal zumindest in dessen Tastpausenzeiten durch die jeweilige Signalauswerteeinrichtung identifizierbar ist.

Gemäß einer vorteilhaften Ausbildung der erfindungsgemäßen Signalübertragungsanordnung ist vorgesehen, daß jeder Frequenzsignalgenerator einen Sinusgenerator enthält, der ausgangsseitig über eine steuerbare Analogschalteinrichtung an dem Ausgang des Frequenzsignalgenerators liegt, daß der Analogschalteinrichtung ein diese über seinen Steuerausgang steuernder Taktsignalgeber zugeordnet ist, daß dem Sinusgenerator ein Rechteckimpulsformer und diesem eine Impulszähleinrichtung zur Abgabe von Zählimpulsen nachgeordnet ist, daß die Impulszähleinrichtung ausgangsseitig mit dem Taktsignalgeber in Verbindung steht, der aus den Zählimpulsen ein erstes Taktsignal mit der vorgegebenen Tast- und Tastpausenzeit und ein zweites Taktsignal mit der weiteren Tast- und Tastpausenzeit ableitet und daß der Taktsignalgeber einen den Steuereingang des Frequenzsignalgebers bildenden Umschalteingang aufweist, bei dessen Beaufschlagung mit dem Mitnahmesignal der Taktsignalgeber von der Abgabe des ersten Taktsignals an seinem Steuerausgang auf die Abgabe des zweiten Taktsignals umschaltbar ist.

Die am Ausgang des Sinusgenerator liegende vorzugsweise tonfrequente Wechselspannung wird über die steuerbare Analogschalteinrichtung entsprechend ihrer Ansteuerung mit der einen Tast- und Tastpausenzeit oder der weiteren Tast- und Tastpausenzeit auf die Signalleitung durchgeschaltet. Die Tast- und Tastpausenzeit bzw. weitere Tast- und Tastpausenzeit wird dabei mit Hilfe des Rechteckimpulsformers und der nachgeordneten Impulszähleinrichtung aus der Frequenz der sinusförmigen Wechselspannung abgeleitet, so daß das von der Sende-/Empfangseinrichtung jeweils auf die Signalleitung abgegebene erste bzw. zweite Frequenzsignal in jeder Tastzeit bzw. weiteren Tastzeit jeweils eine vorgegebene Zahl von Wechselspannungsperioden aufweist.

Jeder Taktsignalgeber weist in vorteilhafter Weise einen Funktionseingang zur Unterdrückung der Erzeugung des ersten Taktsignales auf. Über die Funktionseingänge lassen sich die beiden Sende-/Empfangseinrichtungen wechselseitig in der Weise einstellen, daß eine der beiden Sende-/Empfangseinrichtungen das erste Frequenzsignal zur Überwachung der Signalleitung in diese einspeist und in der jeweils anderen Sende-/Empfangeinrichtung die Erzeugung des ersten Frequenzsignals über den Funktionseingang abgeschaltet wird.

Gemäß einer vorteilhaften Weiterbildung der erfindungsgemäßen Signalübertragungsanordnung ist vorgesehen, daß jede Signalauswerteeinrichtung zur Erfassung der der weiteren Tastzeit zumindest annähernd entsprechenden Signaldauer des jeweils empfangenen Frequenzsignals eine Zeitgeberstufe enthält, die mit ihrem Starteingang dem Eingang des zugehörigen Frequenzsignalempfängers nachgeordnet ist und mit einer der weiteren Tastzeit zumindest annähernd entsprechenden Ablaufzeit ein Ausgangssignal abgibt, daß jeweils ein Impulszähler mit seinem Zähleingang dem Eingang des betreffenden Frequenzsignalempfängers nachgeordnet ist, daß der Zeitgeberstufe und dem Impulszähler eine Auswertelogik nachgeordnet ist, die zur Erzeugung des Abschaltsignals den Impulszähler auf Erreichen eines minimalen Zählerstandes während der Ablaufzeit überwacht und die Erzeugung des Abschaltsignals unterdrückt, sobald der Impulszähler einen vorgegebenen maximalen Zählerstand erreicht. Sobald am Eingang des Frequenzsignalempfängers ein von der Signalleitung übertragenes Frequenzsignal anliegt, wird mit der ersten Schwingung des Frequenzsignals die Zeitablaufstufe gestartet. Der Impulszähler zählt die Schwingungen des Frequenzsignals und die nachgeordnete Auswertelogik sperrt die Erzeugung des Abschaltsignals, wenn innerhalb der Ablaufzeit nicht eine dem minimalen Zählerstand entsprechende Anzahl von Schwingungen empfangen wurde oder wenn die Anzahl der empfangenen Schwingungen den maximalen Zählerstand erreicht.

Zur Auswertung der Signalpausen der jeweils empfangenen Frequenzsignale enthält gemäß einer vorteilhaften Weiterbildung der erfindungsgemäßen Signalübertragungsanordnung jede Signalauswerteeinrichtung einen taktgesteuerten Impulspausenzeitzähler, der mit seinem Rücksetzeingang dem Eingang des zugeordneten Frequenzsignalempfängers nachgeordnet ist; dem Impulspausenzeitzähler ist die Auswertelogik nachgeordnet, die zur Erzeugung des Abschaltsignals den Impulspausenzeitzähler auf Erreichen eines weiteren minimalen Zählerstandes überwacht und die Erzeugung des Abschaltsignals unterdrückt, sobald ein vorgegebener weiterer maximaler Zählerstand erreicht wird.

In Verbindung mit der Auswertung der Signaldauer der empfangenen Frequenzsignale wird hierdurch eine sichere Erkennung von empfangenen Mitnahmesignalen gewährleistet.

Gemäß einer weiteren vorteilhaften Ausbildung der erfindungsgemäßen Signalübertragungsanordnung stehen in jeder Sende-/Empfangseinrichtung die Zeitgeberstufe und der Impulspausenzeitzähler jeweils über Takteingänge mit der Impulszähleinrichtung des Frequenzsignalgenerator in Verbindung. Die Ablaufzeit der Zeitablaufstufe und die Zeitbasis für den Impulspausenzeitzähler werden dabei den der Frequenz des Sinusgenerators abgeleitet, so daß eine sehr genaue Überwachung der empfangenen Frequenzsignale auf ihre Tast- und Tastpausenzeit erfolgt.

Die erfindungsgemäße Signalübertragungsanordnung wird im folgenden anhand eines bevorzugten Ausführungsbeispiels in den Figuren 1 bis 14 erläutert.

Fig. 1 zeigt die Anordnung des Ausführungsbeispiels der erfindungsgemäßen Signalübertragungsanordnung bei einer Vergleichsschubeinrichtung.

Fig. 2 zeigt in einemBlockschaltbild den prinzipiellen Aufbau einer Sende-/Empfangseinrichtung der in Fig. 1 gezeigten Signalübertragungsanordnung.

In den Figuren 3 bis 14 sind die in Fig. 2 dargestellten Funktionsblöcke detailliert dargestellt.

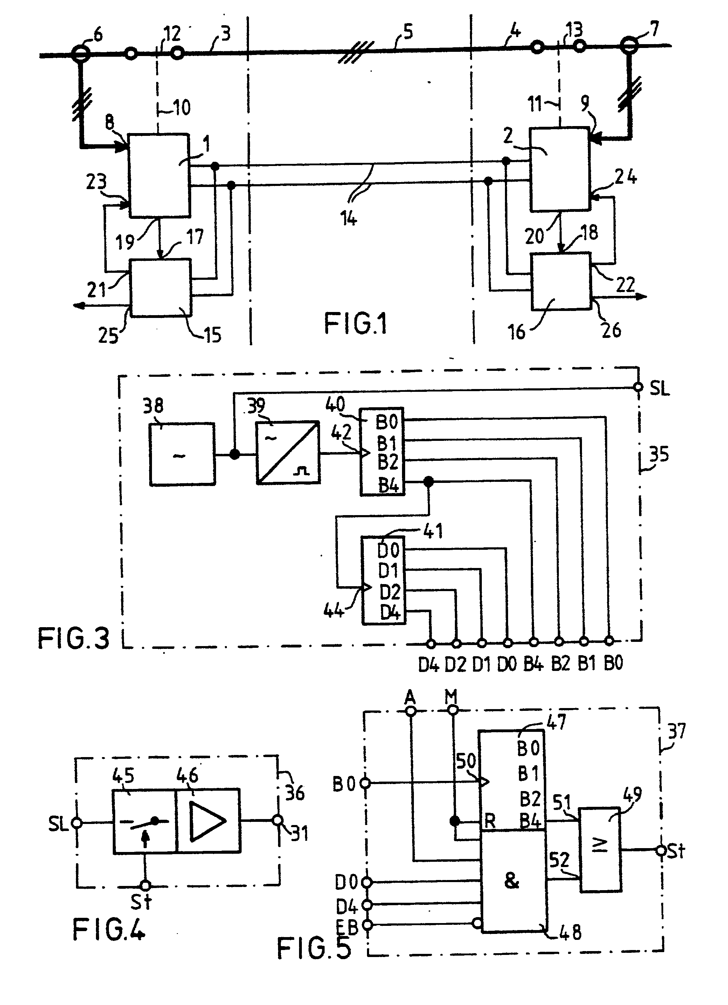

Fig. 1 zeigt die prinzipielle Anordnung der erfindungsgemäßen Signalübertragungsanordnung bei einer Vergleichsschutzeinrichtung. Die Vergleichsschutzeinrichtung weist zwei Überwachungsstationen 1 und 2 auf, die jeweils an unterschiedlichen Enden 3 und 4 eines zu überwachenden Schutzabschnittes 5 einer Energieversorgungsanlage - hier einer dreiphasigen Energieübertragungsleitung - angeordnet sind. Mit Hilfe von Wandlern 6 und 7 werden an jedem Ende 3 und 4 des Schutzabschnittes 5 die jeweils dort auftretenden Phasenspannungen und/oder Phasenströme der Energieübertragungsleitung erfaßt und als Meßgrößen den jeweiligen Überwachungsstationen 1 und 2 an Meßeingängen 8 bzw. 9 zugeführt. Jede der beiden Überwachungsstationen 1 und 2 weist jeweils einen Steuerausgang 10 bzw. 11 zur Abgabe eines Abschaltsignals an einen zugeordneten steuerbaren Schalter 12 bzw. 13 auf, der an dem jeweiligen Ende 3 bzw. 4 des Schutzabschnittes 5 im Zuge der Energieübertragungsleitung angeordnet ist. Das Abschaltsignal für den jeweiligen Trennschalter 12 bzw. 13 wird in der zugeordneten Überwachungsstation 1 bzw. 2 jeweils in Abhängigkeit von den an beiden Enden 3 und 4 des Schutzabschnittes 5 erfaßten Meßgrößen erzeugt. Hierzu sind beide Überwachungsstationen 1 bzw. 2 über eine zweiadrige Signalleitung 14 miteinander verbunden, auf der die Meßgrößen oder eine aus ihnen gebildeten Vergleichsgröße zwischen beiden Überwachungsstationen 1 und 2 übertragen wird, so daß in jeder Überwachungsstation 1 bzw. 2 jeweils eine Auswertung der an beiden Enden 3 und 4 erfaßten Meßgrößen ermöglicht ist.

Zur Überwachung der Signalleitung 14 auf Leitungsfehler, wie z. B. Leitungsbruch oder Kurzschluß, sowie zur Übertragung von sogenannten Mitnahmesignalen zwischen den beiden Überwachungsstationen 1 und 2 auf der Signalleitung 14 ist eine Signalübertragungsanordnung mit zwei Sende-/Empfangseinrichtungen 15 und 16 vorgesehen, die den jeweiligen Überwachungsstationen 1 und 2 zugeordnet und an den Enden der Signalleitung 14 angeschlossen sind. Jede Sende-/Empfangseinrichtung 15 bzw. 16 ist jeweils über einen Steuereingang 17 bzw. 18 mit einem Signalausgang 19 bzw. 20 der betreffenden Überwachungsstation 1 bzw. 2 verbunden; die Signalausgänge 19 und 20 dienen jeweils zur Abgabe eines in der betreffenden Überwachungsstation, z. B. 1, erzeugten Mitnahmesignals, das über die Signalleitung 14 an die jeweils gegenüberliegende Überwachungsstation 2 übertragen wird und dort zur Anregung der Überwachungsstation 2 im Sinne einer Abgabe eines Abschaltsignals an den zugeordneten Trennschalter 13 dient. Hierzu weist jede Sende-/Empfangseinrichtung 15 und 16 jeweils einen Ausgang 21 bzw. 22 zur Abgabe eines Abschaltsignals an einen entsprechenden Eingang 23 bzw. 24 der zugeordneten Überwachungsstation 1 bzw. 2 auf. Zur Überwachung der Signalleitung 14 weist weiterhin jede Sende-/Empfangseinrichtung 15 unb 16 jeweils einen Fehlermeldeausgang 25 bzw. 26 auf, an den hier nicht dargestellte Indikatorelemente, wie z. B. Signallampen oder Melderelais, angeschlossen sein können.

Vor der Beschreibung der Sende-/Empfangseinrichtungen 15 und 16 soll im folgenden eine Übersicht über die Funktionsweise der Signalübertragungsanordnung entsprechend dem dargestellten Ausführungsbeispiel gegeben werden.

Zur Überwachung der Signalleitung 14 wird in einer Richtung von einer Sende-/Empfangseinrichtung, z. B. 15, zu der gegenüberliegenden Sende-/Empfangseinrichtung 16 über die Signalleitung 14 ein erstes Frequenzsignal übertragen, das aus einer sinusförmigen Wechselspannung mit einer Frequenz von 2 kHz besteht, die mit einer Tastzeit von 8 ms und einer nachfolgenden Tastpausenzeit von 72 ms getaktet ist. Eine Störung der Signalleitung 14 wird mit einer Verzögerung von etwa 3 Sekunden an dem Fehlermeldeausgang 26 der Sende-/Empfangseinrichtung 16 angezeigt.

Das Mitnahmesignal kann von beiden Sende-/Empfangseinrichtungen 1 und 2 gesendet und empfangen werden. Die Übertragung eines Mitnahmesignals erfolgt in Form eines zweiten Frequenzsignals vorrangig gegenüber der Übertragung des zur Signalleitungsüberwachung dienenden ersten Frequenzsignals; das zweite Frequenzsignal besteht ebenfalls aus einer sinusförmigen Wechselspannung mit einer Frequenz von 2 kHz, die jedoch mit einer weiteren Tastzeit von 8 ms und einer weiteren Tastpausenzeit von ebenfalls 8 ms getaktet ist. Die empfangsseitige Auswertung des zweiten Frequenzsignals erfolgt durch Zählen der jeweils empfangenen Schwingungen, wobei ein fehlerfreier Empfang eines Mitnahmesignals dann erkannt wird, wenn das jeweils empfangene Frequenzsignal zweimal hintereinander eine der weiteren Tastzeit zumindest annähernd entsprechende Signaldauer und nachfolgend eine der weiteren Tastpausenzeit zumindest annähernd entsprechende Signalpause aufweist.

Fig. 2 zeigt den prinzipellen Aufbau einer der beiden baugleichen Sende-/Empfangseinrichtungen 15 und 16. Zur Vereinfachung sind jeweils miteinander in Verbindung stehende Eingänge und Ausgänge gleich indiziert.Jede Sende-/Empfangseinrichtung enthält jeweils einen Frequenzsignalgenerator 30 mit einem Ausgang 31 und einen Frequenzsignalempfänger 32 mit einem Eingang 33. Der Ausgang 31 des Frequenzsignalgenerators 30 und der Eingang 33 des Frequenzsignalempfängers 32 sind miteinander verbunden und an einer Übertragungsseite eines Übertragers 34 angeschlossen, der an seiner anderen Übertragungsseite an der zweiadrigen Signalleitung 14 liegt.

Der Frequenzsignalgenerator 30 enthält einen Sinus-/Rechteckgenerator 35, der an einem Ausgang SL sine sinusförmige Wechselspannung von 2 kHz abgibt und an weiteren Ausgängen B0, B1, B2, B4, D0, D1, D2 und D4 jeweils aus der sinusförmigen Wechselspannung abgeleitete Rechtecksignale abgibt. Zwischen dem Ausgang SL des Sinus-/Rechteckgenerators 35 und dem Ausgang 31 des Frequenzsignalgenerators 30 liegt ein steuerbarer Analogschalter 36, der die seinem Eingang SL zugeführte Wechselspannung in Abhängigkeit von einem Signal an seinem Steuereingang St an den Übertrager 34 durchschaltet. Der Steuereingang St ist mit einem entsprechend bezeichneten Steuerausgang eines Taktsignalgebers 37 verbunden. Dieser ist über einen Umschalteingang M zwischen der Abgabe eines ersten Taktsignals mit einer Tast- und Tastpausenzeit von 8 ms bzw. 72 ms und einem zweiten Taktsignal mit einer weiteren Tast- und Tastpausenzeit von jeweils 8 ms umschaltbar. Der Umschalteingang M ist direkt mit einem Steuereingang 17 des Frequenzsignalgebers 30 verbunden und von der zugeordneten Überwachungsstation 1 (vgl. Fig. 1) mit dem Mitnahmesignal beaufschlagbar. Der Taktsignalgeber 37 weist weiterhin einen Funktionseingang A auf, über den die Abgabe des ersten Taktsignals abschaltbar ist. Bei dem beschriebenen Ausführungsbeispiel der erfindungsgemäßen Signalübertragungsanordnung ist in der Sende-/Empfangseinrichtung 15 der Taktgeber 37 zur Abgabe des ersten Taktsignals aktiviert, während in der gegenüberliegenden Sende-/Empfangseinrichtung 16 der betreffende Taktsignalgeber 37 bezüglich der Abgabe des ersten Taktsignals abgeschaltet ist. Zur Erzeugung der unterschiedlichen Taktsignale steht der Taktsignalgeber 37 an Takteingängen B0, D0 und D4 mit den entsprechend bezeichneten Ausgängen des Sinus-/Rechteckgenerators 35 in Verbindung. Der Taktsignalgeber 37 weist einen zusätzlichen Eingang EB auf, über den eine Unterdrückung der Abgabe des ersten Taktsignals möglich ist.

Bei dem dargestellten Ausführungsbeispiel der erfindungsgemäßen Signalübertragungsanordnung wird also zur Überwachung der Signalleitung 14 von der Sende-/Empfangseinrichtung 15 über die Signalleitung 14 an die Sende-/Empfangseinrichtung 16 das erste Frequenzsignal mit jeweils 16 aufeinander folgenden Frequenzsignalschwingungen in 8 ms und einer darauf folgenden Signalpause von 71 ms übertragen. Zur Übertragung eines Mitnahmesignals gibt die jeweilige Sende-/Empfangseinrichtung 15 oder 16 das zweite Frequenzsignal mit jeweils 8 ms und einer nachfolgenden Signalpause von ebenfalls 8 ms ab.

Wie Fig. 3 zeigt, enthält der Sinus-/Rechteckgenerator 35 einen Sinusgenerator 38, der ausgangsseitig an dem Ausgang SI liegt und über diesen die 2 kHz-Wechselspannung abgibt. Dem Sinusgenerator 38 ist ausgangsseitig ein Rechteckimpulsformer 39 nachgeordnet, dem wiederum eine Impulszähleinrichtung, bestehend aus einem Binärzähler 40 und einem Dezimalzähler 41 nachgeordnet ist; dabei ist der Binärzähler 40 direkt über seinen Zähleingang 42 an dem Ausgang 43 des Rechteckimpulsformers 39 angeschlossen, und der Dezimalzähler 41 liegt mit seinem Zähleingang 44 an dem Ausgang B4 des Binärzählers 40. Aufgrund dieser Reihenschaltung des Binärzählers 40 und des Dezimalzählers 41 werden an den Ausgängen B0 bis B4 des Binärzählers 40 und den Ausgängen D0 bis D4 des Dezimalzählers 41 folgende rechteckförmige Zählimpulsfolgen mit den unterschiedlichen Zuständen "1" und "0" erzeugt:

B0: 1000 Hz; 0, 5 ms "1" und 0,5 ms "0"
B1: 500 Hz; 1 ms "1" und 1 ms "0"
B2: 250 Hz; 2 ms "1" und 2 ms "0"
B4: 125 Hz; 4 ms "1" und 4 ms "0"
D0: 62,5 Hz; 8 ms "1" und 8 ms "0"
D1: 8 ms "0", 16 ms "1", 16 ms "0", 16 ms "1", 24 ms "0"
D2: 24 ms "0", 32 ms "1", 24 m2 "0"
D4: 56 ms "0", 61 ms "1", 8 ms "0"

Fig. 4 zeigt den Aufbau der steuerbaren Analogschalteinrichtung 36, bestehend aus einem steuerbaren Analogschalter 45 und einem nachgeordneten Verstärker 46.

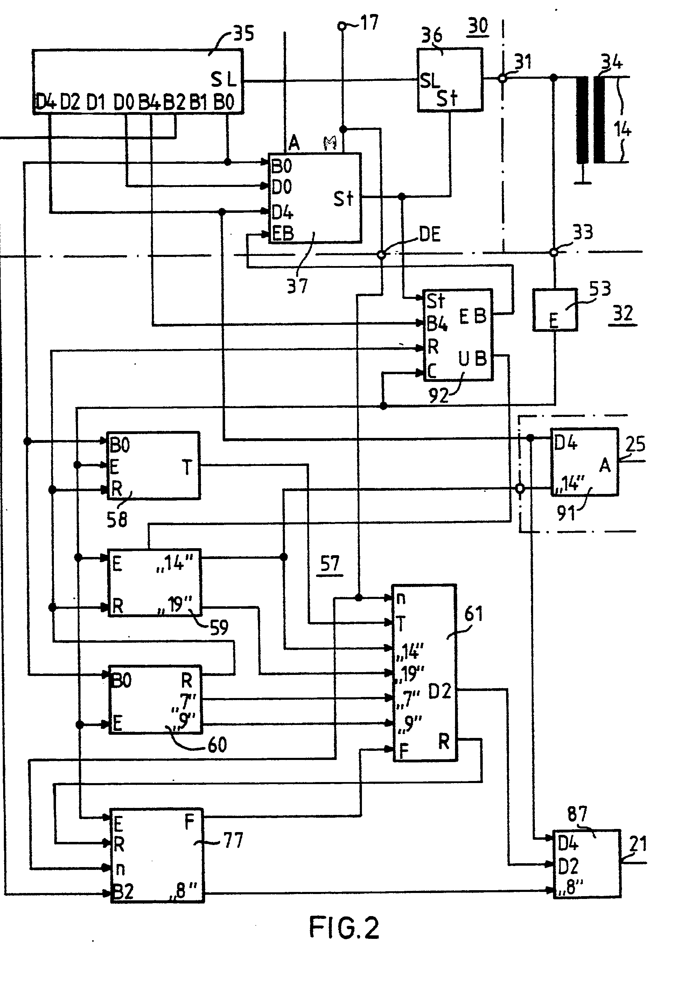

Fig. 5 zeigt den Aufbau des Taktsignalgebers 37, der einen Binärzähler 47, ein UND-Glied 48 und ein ODER-Glied 49 enthält. Diese sind in der Weise angeordnet, daß der Umschalteingang M, der Funktionseingang A, die Eingänge D0 und D4 jeweils Eingänge des UND-Gliedes 48 sind; der zusätzliche Eingang EB bildet einen invertierenden Eingang des UND-Gliedes 48. Der Eingang B0 des Taktsignalgebers 37 wird von dem Takteingang 50 des Binärzählers 47 gebildet, der weiterhin einen mit dem Umschalteingang M verbundenen Rücksetzeingang R aufweist. Das ODER-Glied 49 ist in der Weise dem Binärzähler 47 und dem UND-Glied 48 nachgeordnet, daß ein Eingang 51 des ODER-Gliedes 49 mit dem Ausgang B4 des Binärzählers 47 verbunden ist und ein weiterer Eingang 52 des ODER-Gliedes 49 an dem Ausgang des UND-Gliedes 48 angeschlossen ist. Der Ausgang des ODER-Gliedes 49 bildet den Steuerausgang St des Taktsignalgebers 37. Wird der Umschalteingang M durch Beaufschlagung mit einem Signalpegel "1" deaktiviert, so erzeugt der Taktsignalgeber 37 an seinem Steuerausgang St ein Taktsignal mit einem Tast- und Tastpausenzeit von 8 ms bzw. 72 ms; dieses erste Taktsignal kann durch Anlegen eines Signalpegels "0" an den Funktionseingang A unterdrückt werden. Durch Anlegen eines Mitnahmesignals in Form eines Signalpegels "0" an dem Umschalteingang M wird dieser aktiviert, und an dem Steuerausgang St wird das zweite Taktsignal mit einer Tast- und Tastpausenzeit von jeweils 8 ms abgegeben. Mit einem Signalpegel "1" an dem zusätzlichen Eingang EB läßt sich die Abgabe des ersten Taktsignals blockieren.

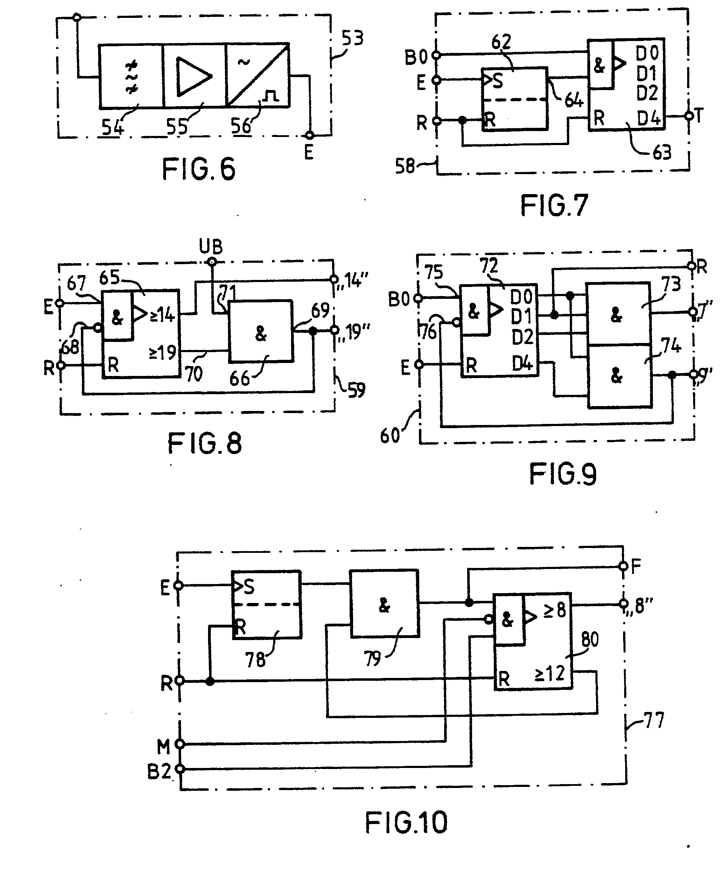

Im folgenden wird wieder auf Fig. 2 Bezug genommen und der Aufbau des Frequenzsignalempfängers 32 beschrieben. Der Frequnzsignalempfänger 32 enthält eine Empfangsstufe 53, die an dem Eingang 33 des Frequenzsignalempfängers 32 liegt. Wie Fig. 6 zeigt, besteht diese Empfangsstufe 53 aus einem an dem Eingang 33 liegenden Bandpaßfilter 54, einer diesem nachgeordneten Verstärkerstufe 55 und einer nachfolgenden Rechteckimpulsformerstufe 56, die ausgangsseitig den Ausgang E der Empfangsstufe 53 bildet. An dem Ausgang E der Empfangsstufe 53 ist eine Signalauswerteeinrichtung 57 (Fig. 2) angeordnet, die im wesentlichen aus einer Zeitgeberstufe 58, einem Impulszähler 59, einem Impulspausenzeitzähler 60 und einer nachgeordneten Auswertelogik 61 besteht.

Die Zeitgeberstufe 58 ist in Fig. 7 detaillierter dargestellt und enthält ein Flip-Flop 62 mit einem nachgeordneten Dezimalzähler 63. Der Setzeingang S des Flip-Flops 62 bildet den Starteingang E der Zeitgeberstufe 58 und ist mit dem Ausgang E der Empfangsstufe 53 verbunden. Der Rücksetzeingang R des Flip-Flops 62 sowie der Rücksetzeingang des nachgeordneten Dezimalzählers 63 sind miteinander verbunden und an einem entsprechend bezeichneten Rücksetzausgang des Impulspausenzeitzählers 60 angeschlossen. Der Dezimalzähler 63 weist ein seinem Takteingang vorgeordnetes UND-Glied auf, das eingangsseitig einerseits mit dem Ausgang 64 des Flip-Flops 64 verbunden ist und andererseits mit dem Ausgang B0 des Sinus-/Rechteckgenerators 35 in Verbindung steht. Der Ausgang D4 des Dezimalzählers 63 bildet den Ausgang T der Zeitgeberstufe 58. Die Zeitgeberstufe 58 wird über ihren Starteingang E mit der ersten Schwingung eines am Eingang 33 des Frequenzsignalempfängers 32 auftretenden Frequenzsignals gestartet und erzeugt nach 8 ms einen Signalzustand "1" an ihrem Ausgang T. Diese 8 ms bilden die Ablaufzeit der Zeitgeberstufe 58 und entsprechen damit zumindest annähernd der weiteren Tastzeit des zweiten Frequenzsignals zur Übertragung eines Mitnahmesignals.

Wie Fig. 8 zeigt, enthält der Impulszähler 59 einen Dezimalzähler 65 und ein nachgeordnetes UND-Glied 66. Der Dezimalzähler 65 steht ebenso, wie die oben bereits beschriebene Zeitgeberstufe 58 über einen Rücksetzeingang R mit dem entsprechend bezeichneten Rücksetzausgang des Impulspausenzeitzählers 60 in Verbindung. An seinem Takteingang weist der Dezimalzähler 65 ein vorgeordnetes UND-Glied auf, das eingangsseitig über einen, den Zähleingang E des Impulszählers 59 bildenden Anschluß 67 mit dem Ausgang E der Empfangsstufe 53 verbunden ist. Ein weiterer invertierender Eingang 68 des dem Takteingang des Dezimalzählers 65 vorgeordneten UND-Gliedes ist mit dem Ausgang 69 des UND-Gliedes 66 verbunden. Der Dezimalzähler 65 weist einen ersten Ausgang " 14" auf, der ein Signal angibt, wenn der Zählerstand größer oder gleich 14 ist. Ein zweiter Ausgang " 19" des Dezimalzähleres 65 gibt an, wenn der Zählerstand den Wert 19 erreicht. Dieser zweite Ausgang " 19" ist mit einem Eingang 70 des UND-Gliedes 66 verbunden, das ausgangsseitig mit einem Ausgang "19" des Impulszählers S9 verbunden ist. Ein weiterer Eingang 71 des UND-Gliedes 66 bildet einen Eingang UB des Impulszählers 59, der dazu dient, die Überlauffunktion und den Ausgang "19" des Impulszählers 59 zu blockieren.

Fig. 9 zeigt den Aufbau des Impulspausenzeitzählers 60, der einen Dezimalzähler 72 und zwei diesem nachgeordnete UND-Glieder 73 und 74 aufweist. Der Dezimalzähler 72 weist einen Takteingang mit einem vorgeordneten UND-Glied auf, das über einen Eingangsanschluß 75 mit dem Ausgang B0 des Sinus-/Rechteckgenerators 35 verbunden ist. Der Dezimalzähler 72 weist weiterhin einen Rücksetzeingang R auf, der mit dem Ausgang E der Empfangsstufe 53 und den entsprechend bezeichneten verbunden ist. Der Ausgang D1 des Dezimalzählers 72 ist mit den Rücksetzeingängen R der Zeitgeberstufe 58 und des Impulszählers 59 verbunden. Über diesen Ausgang R werden die Zeitgeberstufe 58 und der Impulszähler 59 jedesmal dann zurückgesetzt, wenn die Signalpause zwischen zwei empfangenen Frequenzsignalschwingungen größer als 1 bis 2 ms ist. Den Ausgängen D0, D1 und D2 des Dezimalzählers 72 ist das UND-Glied 73 nachgeordnet, das an seinem Ausgang "7" ein Signal abgibt, wenn an dem Eingang E des Impulspausenzeitzählers 60 für eine Zeit von 6 bis 7 ms kein Signal erscheint. Den Ausgängen D0 und D4 des Dezimalzählers 72 ist das weitere UND-Glied 74 nachgeordnet, das an seinem Ausgang "9" ein Signal abgibt, wenn an dem Eingang E des Impulspausenzeitzählers 60 für eine Zeit von 8 bis 9 ms kein Signal anliegt. Der Ausgang "9" ist mit einem invertierenden Eingang 76 des dem Takteingang des Dezimalzählers 72 vorgeordneten UND-Gliedes verbunden und blockiert den Dezimalzähler 72, sobald an dem Ausgang "9" ein Signal erscheint.

Der Zeitgeberstufe 58, dem Impulszähler 59 und dem Impulspausenzähler 60 ist eine Zähleinrichtung 77 zugeordnet, die in Fig. 10 detaillierter dargestellt ist. Die Zähleinrichtung 77 enthält ein Flip-Flop 78, ein nachgeordnetes UND-Glied 79 und einen diesem nachgeordneten Dezimalzähler 80. Die Zähleinrichtung 77 gibt innerhalb einer vorgegebenen Zeit den Mitnahmeentscheid frei. Im einzelnen haben die Eingänge und Ausgänge der Zähleinrichtung 77 folgende Funktionen: Der Eingang E wird mit der ersten empfangenen Frequenzsignalschwingung an dem Eingang 33 der Frequenzsignalempfangseinrichtung 32 gestartet. Ein Signal "1" an dem Eingang R stoppt die Zähleinrichtung 77 und setzt die Ausgänge auf "0" zurück. Ein Signalzustand "0" an dem Eingang M steht dann an, wenn von der eigenen Überwachungsstation, z. B. 1, ein Mitnahmesignal gesendet wird. Da in diesem Fall kein Mitnahmesignal empfangen werden soll, wird die Zähleinrichtung 77 durch den Eingang M blockiert. An dem Ausgang "8" wird 32 bis 36 ms nach dem Auftreten der ersten Frequenzsignalschwingung an dem Eingang 33 des Frequenzsignalempfängers 32 ein Signal abgegeben. Der Ausgang F nimmt gleichzeitig mit dem Auftreten der ersten Frequenzsignalschwingung an dem Eingang 33 des Frequenzsignalempfängers 32 den Zustand "1" an. Dieser Zustand gibt die Auswertung des Mitnahmesignales frei und wird 48 bis 52 ms später wieder auf "0" zurückgesetzt. Hierdurch wird eine weitere Messung des Mitnahmesignales blockiert. Der Ausgang F wird benötigt, um die sichere Auswertung der Signale auch unter Störeinflüssen sicherzustellen.

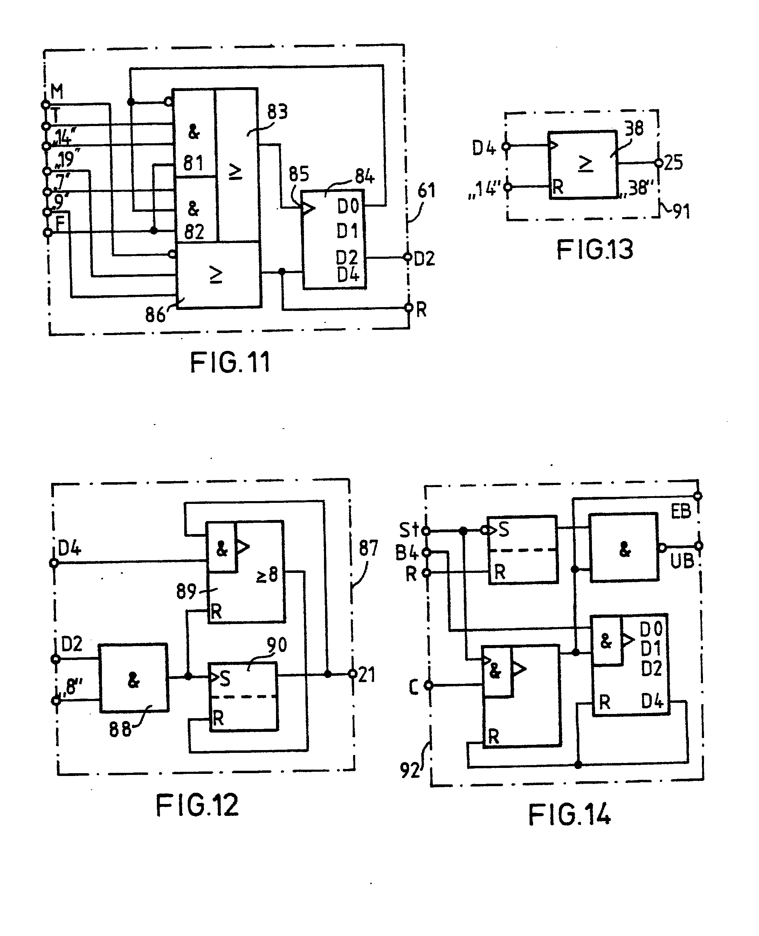

Der Aufbau der der Zeitgeberstufe 58, dem Impulszähler 59, dem Impulspausenzähler 60 und

der Zähleinrichtung 77 nachgeordneten Auswertelogik 61 ist in Fig. 11 dargestellt. Die Auswertelogik 61 enthält zwei UND-Glieder 81 und 82, denen ein ODER-Glied 83 nachgeordnet ist. Das UND-Glied 81 ist eingangsseitig mit dem Ausgang T der Zeitgeberstufe 58 dem ersten Ausgang "14" des Impulszählers 59 und dem Ausgang F der Zähleinrichtung 77 verbunden; das UND-Glied 82 steht eingangsseitig mit dem Ausgang "7" des Impulspausenzeitzählers 60 und dem Ausgang F der Zähleinrichtung 77 in Verbindung. Das ODER-Glied 83 steuert einen nachgeordneten Dezimalzähler 84 über dessen Takteingang 85; der Dezimalzähler 84 ist über seinen Zählerausgang D0 mit einem invertirenden Eingang des UND-Gliedes 81und einem nichtinvertierenden Eingang des UND-Gliedes 82 verbunden. Die Auswertelogik 61 enthält weiterhin ein weiteres ODER-Glied 86, das eingangsseitig mit den Ausgängen "19" und "9" des Impuls- bzw. Impulspausenzeitzählers 59 bzw. 60 verbunden ist und über einen invertierenden Eingang mit einem durch das mitnahmesignal beaufschlagbaren Reaktivierungseingang DE verbunden ist. Das ODER-Glied 86 ist ausgangsseitig mit einem Rücksetzeingang R des Dezimalzählers 84 und weiterhin mit dem Rücksetzeingang R der Zähleinrichtung 77 verbunden. Der Ausgang D2 des Dezimalzählers 84 bildet den Ausgang der Auswertelogik 11. Die Auswertelogik 61 verknüpft die Ausgangssignale der Zeitgeberstufe 58, des Impulszählers 59, des Impulspausenzeitzählers 60 und der Zähleinrichtung 77 in der Weise, daß der Ausgang R den Zustand "1" annimmt, wenn die Eingänge "9" oder "19" mit dem Zustand "1" beaufschlagt sind oder wenn der Eingang M den Zustand "0" aufweist. Dies ist dann der Fall, wenn bei einem empfangenen Frequenzsignal mehr als 9 Frequenzsignalschwingungen aufeinanderfolgen oder wenn die Signalpause 19 ms erreicht oder überschreitet. In diesem Fall ist kein Mitnahmesignal bzw. zweites Frequenzsignal empfangen worden und der Signalzustand an dem Ausgang D2 der Auswertelogik 61 ist "0". An dem Ausgang D2 der Auswertelogik 61 wird dagegen ein Ausgangssignal "1" abgegeben, wenn innerhalb einer Zeit von maximal 48 bis 52 ms vom Beginn der ersten am Eingang 33 des Frequenzsignalempfängeres 32 empfangenen Frequenzsignalschwingung eines Frequenzsignales an jeweils zweimal die Grenzwerte für die Tastzeiten und die Tastpausenzeiten mit 14 bis maximal 19 aufeinanderfolgenden Schwingungsperioden in einer Zeit von 7 bis 8 ms und einer nachfolgenden Tastpausenzeit von mindestens 6 bis maximal 9 ms in der Reihenfolge Tastzeit - Tastpausenzeit - Tastzeit - Tastpausenzeit eingehalten werden.

In Abhängigkeit von dem Ausgangssignal an dem Ausgang D2 der Auswertelogik 61 wird eine nachgeordnete Verzögerungsstufe 87 gesteuert, die in Fig. 12 näher dargestellt ist. Die Verzögerungsstufe 87 enthält ein eingangsseitig mit dem Ausgang D2 der Auswertelogik 61 und dem Ausgang "8" der Zähleinrichtung 77 verbundenes UND-Glied 88, einen Dezimalzähler 89 und ein Flip-Flop 90. An dem Ausgang 21 der Verzögerungsstufe 87 wird ein Abschaltsignal für die zugeordnete Überwachungsstation, z. B. 1, erzeugt, wenn nach einer minimalen Zeit von 32 bis 36 ms nach dem ersten Auftreten einer ersten Frequenzsignalschwingung an dem Eingang 33 des Frequenzsignalempfängers 32 und einer maximalen Zeit von 48 bis 52 ms an dem Ausgang D2 der Auswertelogik 61 ein Ausgangssignal abgegeben wird. Der Eingang D4 der Verzögerungsstufe 87 dient zur Steuerung des Dezimalzählers 80 und ist mit dem entsprechenden Ausgang des Sinus-Rechteckgenerators 35 verbunden. Durch den Dezimalzähler 80 wird das Abschaltsignal an dem Ausgang 21 etwa 560 bis 640 ms nach dem Rückfallen des Eingangssignales an dem Eingang D2 auf "0" verzögert zurückgesetzt. Dadurch steht an dem Ausgang 21 der Verzögerungsstufe 87 ein Abschaltsignal für die zugeordnete Überwachungsstufe, z. B. 1, an, wenn in dem Frequenzsignalempfänger ein Frequenzsignal empfangen worden ist, das dem von der jeweiligen Gegenstation ausgesandten Mitnahmesignal in Form des zweiten Frequenzsignales entspricht.

Zur Überwachung der Signalleitung 14 ist eine Zeitablaufstufe 91 vorgesehen, die entsprechend der Darstellung in Fig. 13 aus einem Dezimalzähler besteht. Dieser Dezimalzähler ist mit seinem Zähleingang D4 an den entsprechend bezeichneten Ausgang des Sinus-/Rechteckgenerators 35 angeschlossen. Der Rücksetzeingang "14" der Zeitablaufstufe 91 ist mit dem gleichnamigen Ausgang des Impulszählers 59 verbunden. Der Zählausgang "38" des die Zeitablaufstufe 91 bildenden Dezimalzählers entspricht dem Fehlermeldeausgang 25 der Sende-/Empfangseinrichtung 15 bzw. 16. Werden für eine Zeit von 2960 bis 3040 ms keine Frequenzsignale mit mindestens 14 Wechselspannungsperioden je Tastzeit von 8 ms empfangen, so wird an dem Ausgang 25 ein Fehlermeldesignal abgegeben und so eine Störung der Signalleitung 14 gemeldet.

Eine in dem Frequenzsignalempfänger 32 angeordnete Blockierstufe 92, die in Fig. 14 näher dargestellt ist, blockiert die Steuerung des Frequenzsignalgenerators 30 und die Auswertung der empfangenen Frequenzsignale in der Signalauswerteeinrichtung 57 unter folgenden Bedingungen: Wenn an dem Eingang 33 des Frequenzsignalempfängers 32 Frequenzsignale empfangen werden und die eigene Sende-/Empfangseinrichtung nicht sendet, so wird der Ausgang EB auf "1" gesetzt und gibt damit an, daß die empfangenen Signale von der jeweiligen Gegenstation gesendet werden. Durch den Ausgang EB wird der Taktsignalgeber 37 in der Weise gesteuert, daß die Abgabe des ersten Taktsignals zur Überwachung der Signalleitung 14 blockiert wird. Das Signal "1" an dem Ausgang EB der Blockierstufe 92 wird selbsttätig durch Zählen der Impulse an dem Eingang B4 nach einer Zeit von 56 bis 64 ms zurückgesetzt. Über den Ausgang UB wird in dem Impulszähler 59 ein Zählüberlauf gesperrt, wenn während einer Zeit von einer bis zwei Millisekunden nach dem Senden eines eigenen Frequenzsignals mit einer Tastzeit von 8 ms der Ausgang EB den Zustand "1" angenommen hat. Dadurch wird verhindert, daß der Impulszähler 59 Frequenzsignalschwingungen eines von der eigenen Sende-/Empfangseinrichtung z.B. 15 erzeugten Frequenzsignals mit den Frequenzsignalschwingungen eines nachfolgend empfangenen Frequenzsignals von der gegenüberliegenden Sende-/Empfangseinrichtung 16 zusammenzählt.

## Patentansprüche

1. Signalübertragungsanordnung für eine Vergleichsschutzeinrichtung, bei der an zwei Enden eines zu überwachenden Schutzabschnittes (5) einer Energieübertragungsanlage in jeweils einer Überwachungsstation (1, 2) Meßgrößen erfaßt werden und in jeder Überwachungsstation jeweils in Abhängigkeit von den in beiden Überwachungsstationen erfaßten Meßgrößen ein Abschaltsignal (10, 11) für einen Schalter (12, 13) an dem jeweiligen Ende des Schutzabschnittes erzeugt wird, mit einer die beiden Überwachungsstationen verbindenden Signalleitung (14) zur Übertragung der Meßgrößen oder einer aus ihnen gebildeten Vergleichsgröße und mit zwei Sende-/Empfangseinrichtungen (15, 16), die jeweils einen Frequenzsignalgenerator (30) und einen Frequenzsignalempfänger (32) mit einem Fehlermeldeausgang (25, 26) sowie einen Übertrager (34) aufweisen, wobei der Frequenzsignalgenerator einer der beiden Sende-/Empfangseinrichtungen ausgangsseitig über den zugehörigen Übertrager mit einem Ende der Signalleitung in Verbindung steht und der Frequenzsignalempfänger der anderen Sende-/Empfangseinrichtung eingangsseitig über den entsprechenden Übertrager mit dem anderen Ende der Signalleitung verbunden ist, **dadurch gekennzeichnet,** daß in beiden Sende-/Empfangseinrichtungen (15, 16) jeweils der Ausgang (31) des Frequenzsignalgenerators (30) mit dem Eingang (33) des Frequenzsignalempfängers (32) verbunden ist,
daß jeder Frequenzsignalgenerator (30) einen durch ein Mitnahmesignal aktivierbaren Steuereingang (17) aufweist,
daß der Frequenzsignalgenerator (30) der einen Sende-/Empfangseinrichtung (15) zur Abgabe eines mit einer vorgegebenen Tast- und Tastpausenzeit getakteten ersten Frequenzsignals bei deaktiviertem Steuereingang (17) ausgebildet ist,
daß der Ausgang (31) des Frequenzsignalgenerators (30) in der anderen Sende-/Empfangseinrichtung (16) bei deaktiviertem Steuereingang (17) abgeschaltet ist,
daß beide Frequenzsignalgeneratoren (30) durch steuereingangsseitige Beaufschlagung mit dem Mitnahmesignal jeweils zur ausgangsseitigen Abgabe eines zweiten getakteten Frequenzsignals mit einer weiteren vorgegebenen Tast- und Tastpausenzeit aktivierbar sind,
daß jeder Frequenzsignalempfänger (32) jeweils eine an seinem Eingang (33) angeschlossene Signalauswerteeinrichtung (57) enthält, die ausgangsseitig ein Abschaltsignal für den der betreffenden Überwachungsstation (1, 2) zugeordneten Schalter (12, 13) in Abhängigkeit davon abgibt, daß zumindest einmalig an dem Eingang (33) des Frequenzsignalempfängers (32) ein Frequenzsignal mit einer der weiteren Tastzeit zumindest annähernd entsprechenden Signaldauer und nachfolgend einer der weiteren Tastpausenzeit zumindest annähernd entsprechenden Signalpause auftritt,

und daß jeder Frequenzsignalempfänger (32) eine Zeitablaufstufe enthält, die einen dem Eingang (33) des Frequenzsignalempfängers (32) nachgeordneten Rücksetzeingang aufweist und ausgangsseitig den Fehlermeldeausgang (25) des betreffenden Frequenzsignalempfängers (32) bildet.

2. Signalübertragungsanordnung nach Anspruch 1, **dadurch gekennzeichnet**, daß jede Signalauswerteinrichtung (57) einen mit dem Mitnahmesignal ihrer Überwachungsstation (1, 2) beaufschlagbaren Deaktivierungseingang (DE) aufweist.

3. Signalübertragungsanordnung nach Anspruch 1 oder 2, **dadurch gekennzeichnet**, daß die Tastzeit und weitere Tastzeit jeweils von gleicher vorgegebener Dauer sind und daß die Tastpausenzeit um ein Vielfaches größer als die Tastzeit ist und um ein Mehrfaches größer als die weitere Tastpausenzeit ist.

4. Signalübertragungsanordnung nach einem der Ansprüche 1 bis 3, **dadurch gekennzeichnet**, daß jeder Frequenzsignalgenerator (30) einen Sinusgenerator (38) enthält, der ausgangsseitig über eine steuerbare Analogschalteinrichtung (36) an dem Ausgang (31) des Frequenzsignalgenerators (30) liegt,

daß der Analogschalteinrichtung (36) ein diese über seinen Steuerausgang (St) steuernder Taktsignalgeber (37) zugeordnet ist,

daß dem Sinusgenerator (38) ein Rechteckimpulsformer (39) und diesem eine Impulszähleinrichtung (40, 41) zur Abgabe von Zählimpulsen nachgeordnet ist,

daß die Impulszähleinrichtung (40, 41) ausgangsseitig mit dem Taktsignalgeber (37) in Verbindung steht, der aus den Zählimpulsen ein erstes Taktsignal mit der vorgegebenen Tast- und Tastpausenzeit und ein weiteres Taktsignal mit der weiteren Tast- und Tastpausenzeit ableitet und

daß der Taktsignalgeber (37) einen den Steuereingang (17) des Frequenzsignalgenerators bildenden Umschalteingang (M) aufweist, bei dessen Beaufschlagung mit dem Mitnahmesignal der Taktsignalgeber (37) von der Abgabe des ersten Taktsignals an seinem Steuerausgang (St) auf die Abgabe des zweiten Taktsignals umschaltbar ist.

5. Signalübertragungsanordnung nach Anspruch 4, **dadurch gekennzeichnet**, daß jeder Taktsignalgeber (37) einen Funktionseingang (A) zur Unterdrückung der Erzeugung des ersten Taktsignals aufweist.

6. Signalübertragungsanordnung nach einem der vorangehenden Ansprüche, **dadurch gekennzeichnet**, daß jede Signalauswerteinrichtung (57) zur Erfassung der der weiteren Tastzeit zumindest annähernd entsprechenden Signaldauer des jeweils empfangenen Frequenzsignals eine Zeitgeberstufe (58) enthält, die mit ihrem Starteingang (E) dem Eingang (33) des zugehörigen Frequenzsignalempfängers (32) nachgeordnet ist und mit einer der weiteren Tastzeit zumindest annähernd entsprechenden Ablaufzeit ein Ausgangssignal abgibt,

daß jeweils ein Impulszähler (59) mit seinem Zähleingang (E) dem Eingang (33) des betreffenden Frequenzsignalempfängers (32) nachgeordnet ist,

daß der Zeitgeberstufe (58) und dem Impulszähler (59) eine Auswertelogik (61) nachgeordnet ist, die zur Erzeugung des Abschaltsignals den Impulszähler (59) auf Erreichen eines minimalen Zählerstandes während der Ablaufzeit überwacht und die Erzeugung des Abschaltsignals unterdrückt, sobald der Impulszähler (59) einen vorgegebenen maximalen Zählerstand erreicht.

7. Signalübertragungsanordnung nach Anspruch 6, **dadurch gekennzeichnet**, daß jede Signalauswerteinrichtung (57) zur Erfassung der der weiteren Tastpausenzeit zumindest annähernd entsprechenden Signalpause des jeweils empfangenen Frequenzsignals einen taktgesteuerten Impulspausenzeitzähler (60) enthält, der mit seinem Rücksetzeingang (E) dem Eingang (33) des zugeordneten Frequenzsignalempfängers (32) nachgeordnet ist und

daß dem Impulspausenzeitzähler (60) die Auswertelogik (61) nachgeordnet ist, die zur Erzeugung des Abschaltsignals den Impulspausenzeitzähler (60) auf Erreichen eines weiteren minimalen Zählerstandes überwacht und die Erzeugung des Abschaltsignals unterdrückt, sobald ein vorgegebener weiterer maximaler Zählerstand erreicht wird.

8. Signalübertragungsanordnung nach Anspruch 6 und 7, **dadurch gekennzeichnet**, daß in jeder Sende-/Empfangseinrichtung (15, 16) die Zeitgeberstufe (58) und der Impulspausenzeitzähler (60) jeweils über Takteingänge (E) mit der Impulszähleinrichtung (40, 41) des Frequenzsignalgenerators (30) in Verbindung stehen.

**Claims**

1. Signal transmission arrangement for a comparison protection device, in which measured variables are detected at two ends of a protection section (5) of an energy transmission system, which section is to be monitored, in respectively one monitoring station (1, 2) and in each monitoring station, in each case as a function of the measured variables detected in both monitoring stations, a switch-off signal (10, 11) is generated for a switch (12, 13) at the respective end of the protection section, having a signal line (14), connecting the two monitoring stations, for transmitting the measured variables or a comparison variable which is established from them and having two transmitting/receiving devices (15, 16), each of which has a frequency signal generator (30) and a frequency signal receiver (32) with an error signalling output (25, 26) and also a transmitter (34), the frequency signal generator of one of the two transmitting/receiving devices communicating on the output side, by way of the pertinent transmitter, with one end of the signal line and the frequency signal receiver of the other transmitting/receiving device being connected on the input side, by way of the corresponding transmitter, with the other end of the signal line, characterised in that in both transmitting/receiving devices (15, 16) in each case the output (31) of the frequency signal generator (30) is connected with the input (33) of the frequency signal receiver (32), in that each frequency signal generator (30) has a control input (17) which can be activated by means of a lock-in signal, in that the frequency signal generator (30) of the one transmitting/receiving device (15) is formed for the emission of a first frequency signal, which is clocked with a given keying and keying pause time, in the case of deactivated control input (17), in that the output (31) of the frequency signal generator (30) in the other transmitting/receiving device (16) is switched off in the case of deactivated control input (17), in that both frequency signal generators (30) can be activated by action of the lock-in signal on the control input side in each case for the emission of a second clocked frequency signal on the output side with a further given keying and keying pause time, in that each frequency signal receiver (32) contains, in each case, a signal evaluation device (57) which is connected to its input (33) and which on the output side emits a switch-off signal for the switch (12, 13), associated with the relevant monitoring station (1, 2), as a function of the fact that there occurs at least once at the input (33) of the frequency signal receiver (32) a frequency signal with a signal duration, which corresponds at least approximately to the further keying time, and subsequently a signal pause which corresponds at least approximately to the further keying pause time and in that each frequency signal receiver (32) contains a time lapse stage which has a reset input arranged after the input (33) of the frequency signal receiver (32) and forms on the output side the error signalling output (25) of the relevant frequency signal receiver (32).

2. Signal transmission arrangement according to claim 1, characterised in that each signal evaluation device (57) has a deactivation input (DE) upon which the lock-in signal of its monitoring station (1, 2) can act.

3. Signal transmission arrangement according to claim 1 or 2, characterised in that the keying time and further keying time are each of the same given duration and in that the keying pause time is many times greater than the keying time and is several times greater than the further keying pause time.

4. Signal transmission arrangement according to one of the claims 1 to 3, characterised in that each frequency signal generator (30) contains a sine-wave generator (38) which connects on the output side, by way of a controllable analog switching device (36), to the output (31) of the frequency signal generator (30), in that there is associated with the analog switching device (36) a clock signal generator (37) which controls the latter by way of its control output (St), in that arranged after the sine-wave generator (38) there is a square-wave pulse generator (39) and arranged after the latter there is a pulse counting device (40, 41) for the emission of counting pulses, in that the pulse counting device (40, 41) communicates on the output side with the clock signal generator (37) which derives from the counting pulses a first clock signal with the given keying and keying pause time and a further clock signal with the further keying and keying pause time and in that the clock signal generator (37) has a switch-over input (M) which forms the control input (17) of the frequency signal generator and with the action of the lock-in signal upon which the clock signal generator (37) can be switched over from the emission of the first clock signal to its control output (St) to the emission of the second clock signal.

5. Signal transmission arrangement according to claim 4, characterised in that each clock signal generator (37) has a function input (A) for the suppression of the generation of the first clock signal.

6. Signal transmission arrangement according to one of the preceding claims, characterised in that each signal evaluation device (57) contains, for the purpose of detecting the signal duration of the respectively received frequency signal, which duration corresponds at least approximately to the further keying time, a time generator stage (58) which with its start input (E) is arranged after the input (33) of the pertinent frequency signal receiver (32) and with a run time, which corresponds at least approximately to the further keying time, emits an output signal, in that in each case a pulse counter (59) is arranged with its counting input (E) after the input (33) of the relevant frequency signal receiver (32), in that there is arranged after the time generator stage (58) and the pulse counter (59) an evaluating logic (61) which for the purpose of generating the switch-off signal monitors the pulse counter (59) to establish whether a minimum count has been reached during the run time and suppresses the generation of the switch-off signal as soon as the pulse counter (59) reaches a given maximum count.

7. Signal transmission arrangement according to claim 6, characterised in that each signal evaluation device (57) contains, for the purpose of detecting the signal pause of the respectively received frequency signal, which pause corresponds at least approximately to the further keying pause time, a clock-controlled pulse pause time counter (60) which with its reset input (E) is arranged after the input (33) of the associated frequency signal receiver (32) and in that there is arranged after the pulse pause time counter (60) the evaluating logic (61) which for the purpose of generating the switch-off signal monitors the pulse pause time counter (60) to establish whether a further minimum count has been reached and suppresses the generation of the switch-off signal as soon as a given further maximum count is reached.

8. Signal transmission arrangement according to claim 6 and 7, characterised in that in each transmitting/receiving device (15, 16) the time generator stage (58) and the pulse pause time counter (60) each communicate by way of clock inputs (E) with the pulse counting device (40, 41) of the frequency signal generator (30).

**Revendications**

1. Dispositif de transmission de signaux pour un dispositif de protection à comparaison, dans lequel des grandeurs de mesure sont détectées dans un poste respectif de contrôle (1, 2), aux deux extrémités d'une section de production (5) à contrôler d'une installation de transmission en énergie et un signal d'interruption (10, 11) pour un interrupteur (12, 13) situé à l'extrémité respective de la section de production est produit dans chaque poste de contrôle, respectivement en fonction des grandeurs de mesure détectées dans les deux postes de contrôle, et comportant une ligne (14) de transmission de signaux qui relie les deux postes de contrôle et sert à transmettre les grandeurs de mesure ou une grandeur de comparaison formée à partir de ces grandeurs, et deux dispositifs d'émission/réception (15, 16), qui possèdent respectivement un générateur de signaux de fréquence (30) et un récepteur de signaux de fréquence (32) comportant une sortie (25, 36) de signalisation de défauts ainsi qu'un transformateur (34), le générateur de signaux de fréquence de l'un des deux dispositifs d'émission/réception étant raccordé, côté sortie, par l'intermédiaire d'un transformateur associé, à une extrémité de la ligne de transmission de signaux, et le récepteur de signaux de fréquence de l'autre dispositif d'émission/réception étant raccordé, côté entrée, par l'intermédiaire du transformateur correspondant, à l'autre extrémité de la ligne de transmission de signaux, caractérisé par le fait que dans les deux dispositifs d'émission/réception (2, 16), respectivement la sortie (32) du générateur de signaux de fréquence (30) est reliée à l'entrée (33) du récepteur de signaux de fréquence (32), que chaque générateur de signaux de fréquence (30) possède une entrée de commande (17) pouvant être activée au moyen d'un signal de commande, que le générateur de signaux de fréquence (30) d'un dispositif d'émission/réception (15) est agencé de manière à délivrer un premier signal de fréquence commandé de façon cadencée avec un temps de présence et un temps de pause prédéterminés, lorsque l'entrée de commande (17) est désactivée, que la sortie (31) du générateur de signaux de fréquence (30) situé dans l'autre dispositif d'émission/de réception (16) est interrompue lorsque l'entrée de commande (17) est désactivée, que les deux générateurs de signaux de fréquence (30) peuvent être activés au moyen de l'envoi, qui s'effectue au niveau de l'entrée de commande, du signal de commande respectivement pour la délivrance, côté sortie, d'un second signal de fréquence commandé de façon cadencée et possédant un autre temps de présence et un autre temps de pause, prédéterminés, que chaque récepteur de signaux de fréquence (32) contient respectivement un dispositif (57) d'évaluation des signaux, qui est raccordé à son entrée (33) et délivre, côté sortie, un signal d'interruption pour l'interrupteur (12, 13) associé au poste de contrôle commandé (1, 2), en fonction du fait qu'il apparait au moins une fois, sur la sortie (33) du récepteur de signaux de fréquence (32), un signal de fréquence possédant une durée correspondant au moins approximativement à l'autre durée de présence et, ensuite, une pause du signal correspondant au moins approximativement à l'autre temps de pause, et que chaque récepteur de signaux de fréquence (32) contient un étage d'exécution temporelle, qui comporte une entrée de remise à l'état initial disposée en aval de l'entrée (33) du récepteur de signaux de fréquence (32) et forme, côté sortie, la sortie de signalisation de défauts (25) du récepteur considéré de signaux de fréquence (32).

2. Dispositif de transmission de signaux suivant la revendication 1, caractérisé par le fait que chaque dispositif (57) d'évaluation des signaux possède une entrée de désactivation (DE) pouvant être chargée avec le signal de commande de son poste de contrôle (1, 2).

3. Dispositif de transmission de signaux suivant la revendication 1 ou 2, caractérisé par le fait que le temps de présence et l'autre temps de présence possèdent respectivement une même durée prédéterminée et que le temps de pause est égal à un multiple du temps de présence et à un multiple de l'autre temps de pause.

4. Dispositif de transmission de signaux suivant l'une des revendications 1 à 3, caractérisé par le fait que chaque générateur de signaux de fréquence (30) contient un générateur de fonction sinusoïdale (38), dont le côté sortie est raccordé, par l'intermédiaire d'un circuit de commutation analogique commandable (36), à la sortie (31) du générateur de signaux de fréquence (30), qu'au dispositif de commutation analogique (36) est associé un générateur de signaux de cadence (37) commandant ce dispositif par l'intermédiaire d'une sortie de commande (St), qu'en aval du générateur de fonction sinusoïdale (38) est branché un dispositif (39) de formation d'impulsions rectangulaires, en aval duquel est branché un dispositif (40, 41) de comptage d'impulsions, servant à délivrer des impulsions de comptage, que le côté sortie du dispositif (40, 41) de comptage d'impulsions est raccordé au générateur de signaux de cadence (37), qui forme, à partir des impulsions de comptage, un premier signal de cadence présentant le temps de présence et le temps de pause prédéterminés, et un autre signal de cadence possédant les autres temps de présence et temps de pause, et que le générateur de signaux de cadence (37) possède une entrée de commutation (M), qui forme l'entrée de commande (17) du générateur de signaux de fréquence, le générateur de signaux de cadence (37) pouvant être commuté de la délivrance du premier signal de cadence sur sa sortie de commande (Si) à la délivrance du second signal de cadence, lorsque l'entrée de commutation est chargée par le signal de commande.

5. Dispositif de transmission de signaux suivant la revendication 4, caractérisé par le fait que chaque générateur de signaux de cadence (37) possède une entrée de fonction (A) servant à supprimer la production du premier signal de cadence.

6. Dispositif de transmission de signaux suivant l'une des revendications précédentes, caractérisé par le fait que chaque dispositif d'évaluation de signaux (57) contient, pour la détection de la durée, qui correspond au moins approximativement à l'autre temps de présence, du signal de fréquence respectivement reçu, un étage formant minuterie (58), dont l'entrée de démarrage (E) est branchée en aval de l'entrée (33) du récepteur associé de signaux de fréquence (32) et délivre un signal de sortie, avec un temps d'exécution correspondant au moins approximativement à l'autre temps de présence, que l'entrée de comptage (E) d'un compteur respectif d'impulsions (59) est branchée en aval de l'entrée (33) du récepteur considéré de signaux de fréquence (32), qu'en aval de l'étage formant minuterie (58) et du compteur d'impulsions (59) est branchée une logique d'évaluation (61), qui, pour la production du signal d'interruption, contrôle l'apparition d'un état de comptage minimal du compteur d'impulsions (59) pendant la durée d'exécution et arrête la production du signal d'interruption dès que le compteur d'impulsions (59) atteint un état de comptage maximal prédéterminé.

7. Dispositif de transmission de signaux suivant la revendication 6, caractérisé par le fait que chaque dispositif d'évaluation de signaux (57) contient, pour la détermination de la pause, qui correspond au moins approximativement à l'autre temps de pause, du signal de fréquence respectivement reçu, un compteur (60) de durée de pause entre impulsions, commandé de façon cadencée, dont l'entrée de remise à zéro (E) est branchée en aval de l'entrée (33) du récepteur de signaux de fréquence (32), et qu'en aval du compteur (60) du temps de pause entre impulsions est branchée la logique d'évaluation (61), qui, pour la production du signal d'interruption, contrôle l'instant où le compteur (60) du temps de pause entre impulsions atteint un autre état minimum de comptage et supprime la production du signal d'interruption, dès qu'un autre état de comptage maximum prédéterminé est atteint.

8. Dispositif de transmission de signaux suivant les revendications 6 et 7, caractérisé par le fait que dans chaque dispositif d'émission/réception (15, 16), l'étage formant minuterie (58) et le compteur (60) du temps de pause entre impulsions sont reliés respectivement par l'intermédiaire d'entrées de cadence (E) au dispositif (40, 41) de comptage des impulsions du générateur de signaux de fréquence (30).

FIG.1

FIG.3

FIG.4

FIG.5

FIG.2

FIG.6

FIG.7

FIG.8

FIG.9

FIG.10

FIG.11

FIG.13

FIG.12

FIG.14